# EUROPÄISCHE PATENTSCHRIFT

(11) **EP 0 768 036 B1**
(45) Veröffentlichungstag und Bekanntmachung des Hinweises auf die Patenterteilung: **22.08.2001**
(21) Anmeldenummer: 96250225.8
(22) Anmeldetag: 10.10.1996
(51) Int. Cl.: A01N 65/00, A01N 65/02

(54) **Biopolymere Zusammensetzung und Verfahren zur Herstellung eines stabilisierten Produktes unter Verwendung dieser Zusammensetzung**
Biopolymer composition and method of preparation of a stabilized product therewith
Composition biopolymérique et méthode de la production d'un produit stabilisé en utilisant cette composition

(30) Priorität: 11.10.1995 DE 19539403
(43) Veröffentlichungstag der Anmeldung: 16.04.1997
(73) Patentinhaber: IGV Institut für Getreideverarbeitung GmbH, 14558 Bergholz-Rehbrücke (DE)
(72) Erfinder: Thomann, Ralph, Dr., 14558 Bergholz-Rehbrücke (DE); Bauermann, Ulrike, 14558 Bergholz-Rehbrücke (DE); Ehrich, Joachim, 14542 Werder/Havel (DE)
(74) Vertreter: Radwer, Dieter

(56) Entgegenhaltungen:
- EP-A- 0 303 764
- EP-A- 0 474 095
- EP-A- 0 632 101
- WO-A-95/10936
- DE-A- 3 723 447
- DE-A- 4 222 139
- DE-A- 4 343 506
- DE-A- 4 343 670
- DE-A- 19 513 491
- GB-A- 2 256 140
- DATABASE WPI Section Ch, Week 9410 Derwent Publications Ltd., London, GB; Class A97, AN 94-079339 XP002023219 & JP-A-06 030 979 (KURATA YG) , 8.Februar 1994
- DATABASE WPI Section Ch, Week 9512 Derwent Publications Ltd., London, GB; Class C03, AN 95-085311 XP002023220 & JP-A-07 010 719 (MAKI SHOJI KK) , 13.Januar 1995

## Beschreibung

Die Erfindung betrifft eine biopolymere Zusammensetzung auf der Basis von Zellulose, Stärke, Protein aus Getreide- oder anderen nachwachsenden Rohstoffen und ein Verfahren zur Herstellung von Isolierstoffen, Dämmstoffen und technischen Formkörpern aus dieser Zusammensetzung.

Der Einsatz von Werkstoffen aus nachwachsenden Rohstoffen in der industriellen Produktion wird in zunehmendem Maße zu einem wirtschaftlichen Erfordernis und ist ein wesentlicher Beitrag zur Verminderung von Umweltbelastungen und zum Schutz der Umwelt.

So ist beispielsweise aus DE 43 17 239 A1 eine Lösung bekannt, die anstelle der aus Mineral- und Kunststofffasern bestehenden Isolier- und Dämmstoffe, die gesundheitlich nicht unbedenklich und im Falle ihrer Entsorgung die Umwelt schwer belasten, Naturfasern aus Flachs, Wolle oder Biomassen einsetzt. Die nach diesem Vorschlag hergestellten Isoliermatten bestehen aus einer Gewebeumhüllung, für die beispielsweise Jute, Flachs oder ein anderes Material eingesetzt wird und aus einer Füllung aus Flachsfasern, Wolle, Schilf oder Stroh. Zum Schutz dieser Isoliermatten gegenüber Brand, Insekten und Fäulnis ist eine Behandlung der Füllung mit Borsalz, Polybor, Borsäure und anderem Material vorgesehen. Die mit dem Einsatz natürlicher Werkstoffe aus nachwachsenden Rohstoffen erreichbaren Vorteile werden durch die Schutzbehandlung wieder aufgehoben, da die mit Bor- und Borverbindungen behandelten Materialien bei einer Entsorgung die Umwelt zusätzlich belasten.

Ein aus nachwachsenden Rohstoffen hergestellter Baudämmstoff ist aus DE 43 17 697 A1 bekannt. Der vorgeschlagene Baudämmstoff besitzt eine Papierhülle, die gegebenenfalls beschichtet, imprägniert oder mit einer Folie laminiert ist und eine Füllung aus schüttfähigen, geschäumten Stärkeflocken, Stärkeformkörpern oder aus Stärkehart- und/oder -weichschaumplatten. Die Füllung selbst ist entweder eine native Stärke in natürlicher oder Hybridform, aus beispielsweise Kartoffeln, Maniok, Mais, Mais mit hohem Amylosegehalt, Getreidemehl oder ein Stärkederivat aus einer auf physikalischem oder chemischem Wege modifizierten Stärke. Gemäß einem weiteren Merkmal dieser Erfindung ist die Füllung flammenhemmend, antibakteriell und/oder hydrophob modifiziert.

Durch die DE 43 43 506 A1 ist auch bereits die Verwendung von Trebern, namentlich aus der Bierherstellung, für schadstofffreie, natürliche Isolier- und Dämmstoffe bekannt. Unter Ausnutzung des in Biertrebern enthaltenen relativ hohen Gehalts an Eiweiß, Stärke und Zucker, werden mit hohen Drücken und hoher Temperatur Formkörper hergestellt. Da diese Formkörper anfällig für einen organischen Verderb, insbesondere unter Einwirkung von Mikroorganismen sind, wird eine Konservierung mit Hilfe von organischen oder anorganischen Stoffen, insbesondere mit organischen Säuren, z.B. Zitronensäure und Essigsäure, vorgenommen.

Die Herstellung biologisch abbaubarer Gebrauchsgegenstände aus natürlicher Stärke und maximal 40 Gew.-% Wasser ist aus EP 0 474 095 A1 bekannt, wobei diese Zusammensetzung gegebenenfalls durch Zusätze in Form von Vernetzungsmitteln, Weichmachern und Katalysatoren, wie beispielsweise Zitronen-, Apfel-, Ascorbin-, Wein-, Adipin- oder Essigsäure angereichert wird. Zur Plastifizierung, Gelantinierung und/oder zum Verpressen wird die gegebenenfalls angereicherte Zusammensetzung in Abhängigkeit vom Wassergehalt in einem Extruder einer Wärmebehandlung zwischen 30° und 200 °C unterworfen. Hieran schließt sich ein kontinuierlicher oder diskontinuierlicher Formprozeß an. Nach diesem Vorschlag werden vorzugsweise Verpackungsmaterialien, die auch für Lebensmittel einsetzbar sind, und Füllstoffe hergestellt. Durch Öle oder Fette, andere die Stärke unlöslich machende Substanzen (Aldehyde) oder Harze auf Formaldehydbasis (Melamin, Harnstoffe oder Kunststoffharze) können die aus der vorgenannten Zusammensetzung hergestellten Produkte gegen Schädlingsbefall geschützt und/oder eine gewünschte Wasserresistenz erreicht werden. Die Weichmacher, Vernetzungsmittel mit geeigneten Katalysatoren oder andere Aditiva, wie Öle, Fette und/oder Farbstoffe, werden der Basiszusammensetzung aus Stärke und Wasser vor dem Einbringen in einen Extruder, beispielsweise in einen Mischer oder auch direkt im Extruder zugeführt.

Aus DE 43 43 670 A1 ist schließlich eine eßbare Umhüllungsfolie auf der Basis von Collagen für die Verpackung von Lebensmitteln bekannt, die zur Stabilisierung der Farbe und/oder des Geschmacks des verpackten Lebensmittels als integrierenden Bestandteil feinteilige Gewürzstoffe enthält, wobei sich der überwiegende Anteil der Gesamtoberfläche der Gewürzpartikel innerhalb der Collagenschicht der Folie befindet. Zur Herstellung der vorgeschlagenen Umhüllungsfolie wird das Collagengel vor Überführung in den Extruder homogen mit den feinteiligen Gewürzpartikeln vermischt, dann in einen Extruder überführt und in an sich bekannter Weise auf ein Laufband extrudiert und weiterverarbeitet. Gemäß einer bevorzugten Ausführungsform wird das auf bekannte Weise hergestellte Gel in einen Extruder überführt und auf ein Laufband extrudiert, welches mit einer dünnen Schicht des in Partikelform vorliegenden Gewürzes bedeckt ist, so daß die Gewürzpartikel direkt in das aus der Düse austretende Gel integriert und inkorporiert werden. Die extrudierte Folie wird dann in bekannter Weise auf einen vorgegebenen pH-Wert eingestellt, getrocknet und auf einen vorgegebenen Wassergehalt rekonditioniert.

Aus den Stand der Technik sind ferner zahlreiche Lösungen bekannt, die Zusätze aus Gewürz-, Heil- und Tabakpflanzen verwenden, um den Geschmack und das Aussehen ausgewählter Produkte zu verbessern - EP 0 303 764, die Produkte vor mikrobiellem Befall, Schimmel und/oder Frasschäden zu schützen - DE 195 13 491 A1, GB 22 56 140 A, JP 60 30 979, JP 70 10 719 A und WO 95/10 936, oder das Pflanzenwachstum zu fördern und ungestörte Biozönnose und aquatischer Systeme zu erhalten - DE 37 23 447 A1. Die vorgeschlagenen Lösungen gewährleisten jedoch keine Langzeitwirkungen der natürliche Wirkstoffe aus den eingesetzten Gewürz- und Heilpflanzen und sind auf die Herstellung von Isolier- und Dämmstoffen aus nachwachsenden Rostoffen insgesamt nicht übertragbar.

Zusammenfassend ist festzustellen, daß Biopolymere auf der Basis von Protein, Zellulose oder Stärke aus Getreide- und anderen nachwachsenden Rohstoffen in den vielfältigsten Formen bereits eingesetzt werden. Gemeinsames Merkmal aller vorgeschlagenen Lösungen ist die Tatsache, daß dieser Werkstoff naturgemäß mikrobiologisch gefährdet und ein gutes Nährmedium für Insekten und Nagetiere ist. Zu ihrem Schutz müssen deshalb Zusatzkomponenten eingesetzt werden, die insbesondere bei der Verwendung der Biopolymere für Baumaterialien, beispielsweise in Form von Isolier- und Dämmstoffen, über eine Langzeitwirkung verfügen müssen. Die bisher traditionell eingesetzten Formaldehyde und Borverbindungen verfügen zwar über diese Langzeitwirkungen, belasten aber im Falle einer Entsorgung der Baumaterialien die Umwelt in hohem Maße. Diese zum Schutz der Werk- und Baustoffe aus biopolymerem Material eingesetzten Zusatzkomponenten sind daher nur bedingt anwendbar.

Der Erfindung liegt daher die Aufgabe zugrunde, eine Lösung vorzusehen, die unabhängig von den Umwelteinflüssen einen stabilen und langanhaltenden Schutz der aus den eingangs genannten,nachwachsenden, biopolymeren Rohstoffen hergestellten Erzeugnise gegenüber mikrobiellem Befall und Frasschäden durch Insekten und Nagetiere sicher gewährleistet.

Erfindungsgemäß wird die Aufgabe durch die im Anspruch 1 und 7 angeführten Merkmale gelöst. Vorteilhafte Weiterbildungen der Erfindung ergeben sich aus den Unteransprüchen 2 bis 6 und 8.

Die nach der erfindungsgemäßen biopolymeren Zusammensetzung und dem erfindungsgemäßen Verfahren hergestellten Rohstoffe und Produkte, wie beispielsweise Füllkörper zur Herstellung von Isolier- und Dämmplatten, werden im Falle einer Entsorgung vollständig biologisch abgebaut und sind in hohem Maße umweltfreundlich.

Trotz der hohen Druck- und Wärmebelastung in den Extrusionsprozessen behalten die eingesetzten Wirkstoffe ihre Langzeitwirkung gegenüber mikrobiellem Befall und Fraßschäden. Die Lagerstabilität wird dadurch erreicht, daß die eingesetzten Wirkstoffe über die partielle Komplexbildung mit der Stärkehelix der eingesetzten Rohstoffe fixiert werden und somit in stabilisierter Form in dem hergestellten Werkstoff oder dem hergestellten Produkt vorliegen. Der zu schützende Werkstoff oder das zu schützende Produkt ist somit gleichzeitig Matrix des eingesetzten Wirkstoffes.

Bei der Lösung der Aufgabe geht die Erfindung davon aus, daß die in Heil- und Gewürzpflanzen enthaltenen Phytonzide sich durch ein hohes antimikrobielles Potential auszeichnen. Sie besitzen die Fähigkeit, je nach Struktur und Konzentration das Wachstum verschiedener Mikroorganismen in unterschiedlich hohem Maße zu hemmen. Einige Inhaltsstoffe von Heil- und Gewürzpflanzen, beispielsweise Bitter- und Scharfstoffe, sind als wirksame Signalsubstanzen für Tiere bekannt, so daß diese den Verzehr dieser Pflanzen unterlassen.

Gegenüber den bisher bekannten und zum Schutz von Werkstoffen und Produkten aus Stärke, Getreide- und anderen nachwachsenden Rohstoffen eingesetzten Imprägnierverfahren wird gemäß der vorliegenden Lösung der schützende Wirkstoff unmittelbar im Herstellungsprozeß der Werkstoffe und Produkte hinzugesetzt. Hieraus ergeben sich vorteilhafte Voraussetzungen für eine kostengünstige und effektive Gestaltung der gesamten Produktionsprozesse.

Die Erfindung wird nachstehend an einigen Beispielen näher erläutert.

### Beispiel 1:

Zur Prüfung der Langzeitwirkung der Wirkstoffe wurden Prüfkörper hergestellt, wobei 10 Gewichtsanteile der Gesamtmischung und 0,5 Gewichtsanteile (bezogen auf 100 Teile Gesamtzusammensetzung) Wirkstoffextrakt intensiv in einem Mischer vorgemischt werden. Anschließend wird diese homogene Vormischung und die restlichen Komponenten einschließlich des Wassers durchmischt. Diese Mischung wird sowohl bei einer Temperatur von ca. 100 °C und einem Druck von 100 bar in einem Extruder zu Gelatinatstreifen als auch bei ca. 130 °C zu expandierten Formkörpern extrudiert. Um aussagekräftige Ergebnisse in vertretbaren Lagerfristen zu erhalten, wurden die so hergestellten Prüfkörper in eine Klimakammer bei 40 °C und 65 % relativer Luftfeuchtigkeit 3 Monate gelagert. Die Prüfkörper wurden vor und nach der Lagerung den biologischen Testungen unterworfen. Die Ergebnisse dieser Prüfung ergaben, daß die Wirkung der eingesetzten Wirkstoffe auch unter Einwirkung der Temperatur- und Druckbelastungen im Extrusionsprozeß und unter den genannten Lagerbedingungen vollständig erhalten blieb.

### Beispiel 2:

Zur Testung der antimikrobiellen Wirksamkeit wurden Prüfkörper nach den im Beispiel 1 angegebenen Gewichtsanteilen hergestellt und als Wirkstoff u.a. Zimtextrakt in einer Konzentration von 0,5 Gewichtsanteilen eingesetzt. Als Testkeime wurden Penicillium chrysogenum, Aspergillus niger und Saccharomyces cerevisiae eingesetzt. Zur Versuchsdurchführung wird der flüssige, sterile Agar auf etwa 45 °C abgekühlt, mit der definierten Keimsuspension gemischt und in Petrischalen gegossen. Auf den erstarrten Nährboden wurden die Prüfkörper aufgelegt. Anschließend erfolgte die Bebrütung innerhalb 48 Stunden bei 25 °C. Die Auswertung der Prüfkörper ergab keinen mikrobiellen Befall der Proben mit den vorgenannten Testkeimen. Parallel wurden Versuche mit Prüfkörpern, die ohne Extraktzusatz gefertigt wurden, durchgeführt. Diese Prüfkörper waren bereits nach 48 Stunden von den o.g. Keimen mit bloßem Auge erkennbar befallen.

### Beispiel 3:

Zur Testung der repellierenden Wirkung gegenüber Schadinsekten wurden Prüfkörper gemäß der Zusammensetzung nach Beispiel 1 hergestellt, wobei als Wirkstoffe u.a. Extrakte von Tabak und Alant in einer Konzentration von 0,5 Gewichtsanteilen eingesetzt wurden. Für die Prüfung wurden Sitophilus granarius - Kornkäfer, Tribolium confusum - Reismehlkäfer, Trogoderma granarium - Khaprakäfer und Rhizopertha dominica - Getreidekapuziner, also typische Vertreter für Getreideschädlinge, eingesetzt. Die Prüfung erfolgte in einem Wahl- und einem Zwangsversuch. Für den Zwangsversuch wurden luftdurchlässig verschlossene Gläser und für den Wahlversuch Schalen, die durch Markierung in zwei Bereiche geteilt wurden und lichtdicht abgedeckt waren, verwendet. In den Gläsern befand sich ausschließlich die jeweils zu testende Probe. Die Schalen enthielten neben der wirkstoffhaltigen Probe die jeweilige Nullprobe (Prüfkörper ohne Zusatz von Wirkstoffextrakten). Im Zwangsversuch wurden 50 und im Wahlversuch 100 Käfer eingesetzt. Jede Probe wurde über den gesamten Versuchszeitraum von 9 Wochen in einer Klimakammer bei 25 °C und 70 % relativer Luftfeuchtigkeit gelagert. Die Stärke der Fraßspuren sowie die Larvenentwicklung wurde quantitativ bewertet und im Vergleich zur Nullprobe ausgewertet. Im Ergebnis der Testung wurde nach einer dreimonatigen Lagerung der Prüfkörper eine eindeutige repellierende Wirkung der eingearbeiteten Wirkstoffextrakte gegenüber den Schadinsekten festgestellt.

### Beispiel 4:

Zur Prüfung der repellierenden Wirkung gegenüber Schadnagern wurden Prüfkörper mit den angegebenen Gewichtsanteilen gemäß Beispiel 1 aus Roggenvollkornmehl hergestellt und als Wirkstoffkomponente u.a. Johanniskraut- und Alantextrakte in einer Konzentration von 0,5 Gewichtsanteilen eingesetzt. Die Prüfung erfolgte wiederum in Wahl- und Zwangsversuchen. Als Versuchtstiere wurden Rattus norvegicus (Wanderratten) eingesetzt. In den Versuchen wurde das Freßverhalten von 5 Ratten zweimal über 10 Tage getestet. Sie erhielten in Einzelhaltung unter standardisierten Bedingungen die Proben mit Extraktzusatz, entweder ausschließlich (Zwangsversuch) oder als Alternativangebot zu einer Nullprobe (Wahlversuch). Die aufgenommenen Futtermengen wurden für die Auswertung der Versuche gravimetrisch ermittelt, wobei den Tieren täglich frische Prüfkörper gereicht und die Prüfkörper des Vortages zur Auswertung entfernt wurden. Die Auswertung der Testung ergab eine eindeutige repellierende Wirkung der eingesetzten Wirkstoffextrakte.

Zusammenfassend bleibt daher festzustellen, daß mit der vorgeschlagenen Lösung ein umfassender langzeitiger Schutz von Werkstoffen und Produkten aus Getreide- und anderen nachwachsenden Rohstoffen durch die Verwendung von Wirkstoffen aus Gewürz- und Heilpflanzen erreicht werden kann.

Die Verwendung nachwachsender Rohstoffe für die Herstellung von Werkstoffen und Produkten ist vorrangig auf die Nutzung stärkehaltiger Pflanzenmaterialen gerichtet. Die effektivste Form der Aufbereitung des Rohstoffes, die stoffliche Zusammensetzung einschließlich der Hinzufügung von Wirkstoffanteile und gegebenenfalls Zusatzstoffen und die Verarbeitung der aufbereiteten biopolymeren Mischung muß natürlich auf den jeweiligen Einsatzzweck zugeschnitten werden.

Die Produkte selbst sind biologisch vollständig abbaubar, umweltfreundlich und können auf relativ einfache Weise mit leicht beherrschbaren Technologien kostengünstig hergestellt werden.

## Patentansprüche

1. Biopolymere Zusammensetzung zur Herstellung von Isolierstoffen, Dämmstoffen und technischen Formkörpern auf der Basis von Zellulose, Stärke und Proteinen aus Getreide oder anderen nachwachsenden Rohstoffen unter Verwendung von Wirkstoffen aus Gewürz- und Heilpflanzen und gegebenenfalls weiteren Zusatzstoffen in Form von Mineralstoffen, Faserstoffen und Plastifikatoren, **dadurch gekennzeichnet,** daß den Grundstoffen Wirkstoffe ausgewählter Gewürz- und Heilpflanzen in Form zerkleinerter Pflanzenbestandteile mit einer Konzentration von 1 % bis 10 %, ihre Verarbeitungsrückstände, ätherischen Öle, und Extrakte mit einer Konzentation von 0,01 % bis 0,5 % zugesetzt und durch partielle Komplexbildung in der Stärkehelix der Grundstoffe fixiert sind.

2. Zusammensetzung nach Anspruch 1, **dadurch gekennzeichnet,** daß die Wirkstoffe aus der Pflanzenfamilie der Lauraceae, Myrtaceae, Lamiaceae, Solanaceae, Cupressaceae, Hypericaceae und Asteraceae ausgewählt sind.

3. Zusammensetzung nach Anspruch 1, **dadurch gekennzeichnet,** daß zum Schutz gegen mikrobiellen Befall vorzugsweise Wirkstoffe aus Cinnamomum aromaticum / Zimt, Eugenia caryophyllata / Nelke, Thymus vulgaris / Thymian, Inula helenium / Alant, Telekia speciosa / Prächtige Telekie eingesetzt werden.

4. Zusammensetzung nach Anspruch 1, **dadurch gekennzeichnet,** daß zur Erzeugung einer abweisenden repellierenden Wirkung gegenüber Insekten vorzugsweise Wirkstoffe aus Rosmarinus officinales / Rosmarin, Nicotina tabacum / Tabak, Juniperus communis / Wacholder, Inula helenium / Alant, Telekia speciosa / Prächtige Telekie enthalten sind.

5. Zusammensetzung nach Anspruch 1, **dadurch gekennzeichnet,** daß zum Schutz gegenüber Fraßschäden durch Nagetiere vorzugsweise Wirkstoffe aus Juniperus communis / Wacholder, Hypericum perforatum / Johanniskraut, Inula helenium / Alant und Telekia speciosa / Prächtige Telekie zugesetzt sind.

6. Zusammensetzung nach einem der Ansprüche 1 und 5, **dadurch gekennzeichnet,** daß sie Kombinationen von mehreren Wirkstoffen verschiedener Heil- und Gewürzpflanzen enthält.

7. Verfahren zur Herstellung von Isolierstoffen, Dämmstoffen und technischen Formkörpern unter Verwendung einer biopolymeren Zusammensetzung nach Anspruch 1, wobei die Wirkstoffe ausgewählter Gewürz- und Heilpflanzen in den angegebenen Konzentrationen mit einem Anteil der Grundstoffmenge in einem Mischer intensiv vorgemischt, die homogene Vormischung mit der restlichen Grundstoffmenge unter Zugabe von Wasser und gegebenenfalls weiteren Zusatzstoffen vermischt und anschließend in einem Extruder zu einem Galatinat extrudiert wird, **dadurch gekennzeich net,** daß die aufbereitete biopolymere Zusammensetzung durch Kochextrusion bei einer Temperatur von ca. 130 °C und einem Druck von 100 bar extrudiert wird.

8. Verfahren nach Anspruch 7, **dadurch gekennzeichnet,** daß nach der Extrusion ein Spritzgießen bei einer Temperatur von ca. 150 °C und einem Druck von 2000 bar erfolgt.

## Claims

1. Biopolymer composition for producing insulating materials and technical forms on the basis of celluloses, starches and proteins from grains or other regenerative raw materials, using active ingredients from herbs and medicinal herbs and, if necessary, additives in the form of minerals, fibers and plastificators, characterized by, the basic active ingredients from selected herbs and medicinal herbs in the form of pulverized plant components with a concentration of 1% to 10%, are fixed with their processing residues, etheric oils and extracts with a concentration of 0.01 % to 0.05 % and by partial complex formation in the starch helix of the basic materials.

2. Composition in accordance with claim 1, **characterized by** the active ingredients being selected from the plant species lauraceae, myrataceae, lamiaceae, solanaceae, cupressaceae, hypericaceae and asteraceae.

3. Composition in accordance with claim 1, **characterized by** active ingredients from cinnamomum aromaticum / cinnamon, Eugenia caryophyllata /clove, thymus vulgaris / thyme, inula helenium / alanta, telecia speciosa / splendid telecia being used.

4. Composition in accordance with claim 1, **characterized by** preferably active ingredients from juniperus communis / juniper, hypericum perforatum / Saint John's wort, inula helenium / alanta, telecia speciosa / splendid telecia are used to protect from gnawing by rodents.

5. Composition in accordance with claim 1, **characterized by** juniperus communis / juniper, inula helenium / alanta, telecia speciosa / splendid telecia

6. Composition in accordance with claims 1 and 5, **characterized by** containing the combination of several active ingredients from various herbs and medicinal herbs

7. Process for producing insulating materials and technical forms using a biopolymer composition according to claim 1, whereby the active ingredients from selected herbs and medicinal herbs - in the concentrations mentioned are mixed with a portion of the basic substance, the homogenized mixture is then mixed with the remaining basic substance with water and, if necessary, other additives and then extruded to a galatinate in an extruder, **characterized by** the processed biopolymer composition being extruded by heat extrusion at a temperature of ca. 130 °C and a pressure of 100 bar.

8. Process in accordance with claim 7, characterized by an injection molding at a temperature of ca. 150 °C and a pressure of 2000 bar follows the extrusion.

## Revendications

1. Composition biopolymérique destinée à fabriquer des matériaux isolants, des matériaux calorifuges et des pièces techniques moulées à base de cellulose, d'amidon et de protéines provenant de céréales ou d'autres matières brutes renouvelables en utilisant des substances actives issues de plantes médicinales et aromatiques et éventuellement d'autres substances supplémentaires sous forme de substances minérales, de substances fibreuses et de plastifiants, **caractérisée par le fait que** des substances actives de plantes aromatiques et médicinales sélectionnées sont ajoutées aux substances de base sous forme de composants végétaux réduits en petits morceaux avec une concentration allant de 1% à 10%, leurs résidus de traitement, leurs huiles essentielles et leurs extraits étant concentrés de 0,01% à 0,5%, les substances actives sont fixées par complexation dans l'hélice d'amidon des substances de base.

2. Composition selon la revendication 1, **caractérisée par le fait que** les substances actives sont sélectionnées parmi la famille végétale des Lauraceae, Myrtaceae, Lamiaceae, Solanaceae, Cupressaceae, Hypericaceae et Asteraceae.

3. Composition selon la revendication 1, **caractérisée par le fait que,** pour la protection contre l'infection microbienne, des substances actives provenant de Cinnamomum aromaticum / cannelle, Eugenia caryophyllata / clou de girofle, Thymus vulgaris / thym, Inula helenium / inule aulnée, telekia speciosa / télékie élégante sont de préférences employées.

4. Composition selon la revendication 1, **caractérisée par le fait que,** afin de générer un effet insectifuge, des substances actives provenant de Rosmarinus officinales / romarin, Nicotina tabacum / plante à tabac, Juniperus communis / genièvre commun érigé, Inula helenium / inule aulnée, Telekia speciosa / télékie élégante sont de préférence employées.

5. Composition selon la revendication 1, **caractérisée par le fait que,** pour la protection contre les ravages causés par les rongeurs, des substances actives provenant de Juniperus communis / genièvre commun érigé, Hypericum perforatum / millepertuis, Inula helenium / inule aulnée et Telekia speciosa / télékie élégante sont de préférence employées.

6. Composition selon l'une des revendications 1 et 5, **caractérisée par le fait qu'**elle contient des combinaisons de plusieurs substances actives de différentes plantes médicinales et aromatiques.

7. Composition destinée à fabriquer des matériaux isolants, des matériaux calorifuges et des pièces techniques moulées en utilisant une composition biopolymère selon la revendication 1, les substances actives de plantes médicinales et aromatiques sélectionnées étant prémélangées intensément dans un mélangeur dans des concentrations indiquées à une partie de la quantité de substances de base, le prémélange homogène étant bien mélangé avec le reste de quantité de substances de base en y rajoutant de l'eau et éventuellement d'autres substances supplémentaires et étant finalement extrudé dans une extrudeuse pour être transformé en substance gélatineuse, **caractérisée par le fait que** la composition biopolymérique préparée est éxtrudée par cuisson-extrusion à une température d'env. 130°C et avec une pression de 100 bar.

8. Composition selon la revendication 7, **caractérisée par le fait qu'**un moulage par injection à une température d'env. 150°C et avec une pression de 2000 bar fait suite à l'extrusion.
